# EUROPÄISCHE PATENTANMELDUNG

(11) **EP 0 766 492 A2**
(43) Veröffentlichungstag der Anmeldung: **02.04.1997**
(21) Anmeldenummer: 96114665.1
(22) Anmeldetag: 12.09.1996
(51) Int. Cl.: H04Q 11/04, H04L 12/413

(54) **Verfahren zur gemeinsamen Nutzung eines Zeitmultiplexübertragungskanals durch eine Mehrzahl von Sendern**

(30) Priorität: 28.09.1995 DE 19536251
(71) Anmelder: SIEMENS AKTIENGESELLSCHAFT, 80333 München (DE)
(72) Erfinder: Prey, Gerhard, 82223 Eichenau (DE)

(57) **Zusammenfassung**

Vor Zugriff auf den gemeinsamen Übertragungskanal prüfen die Sender (SLM-n bis SLM-x) auf einem zu ihnen zurückgeschleiften Collision-Bus (CDX, CDR) nach einem bekannten Collision-Detection-Verfahren, ob der Kanal frei ist. Um einen Störbetrieb zu vermeiden, der bei Unterbrechung des Zugangs zur sendereigenen Collision-Prüfschaltung und damit dauerndem Empfang eines Signals von Binärwert 1 zustandekommt, geben die Sender außerhalb der Zeitlagen des Übertragungskanals periodisch einen Testimpuls auf den Collision-Bus, der bei Vorliegen einer solchen Unterbrechung eine Informationsaussendung verhindert.

## Beschreibung

Die Erfindung betrifft ein Verfahren zur gemeinsamen Nutzung eines Zeitmultiplexübertragungskanals durch eine Mehrzahl von Sendern gemäß dem Oberbegriff des Patentanspruchs 1.

Es handelt sich demnach um die Übertragung von binärcodierten Informationen, bei denen Bits des einen Binärwerts durch ein Potential dargestellt sind, das sich gegenüber dem Potential, durch das die Bits des anderen Binärwerts dargestellt sind, bei gleichzeitigem Auftreten auf einer Übertragungsstrecke durchsetzt.

Um zu vermeiden, daß es bei der gemeinsamen Nutzung des Zeitmultiplexübertragungskanals zu Kollisionen kommt, ist ein Prüfkanal eingerichtet, auf den die Sender ihre auszusendenden Informationen außer auf den Übertragungskanal abgeben und über den sie in Rückwärtsrichtung diese ausgesendeten Informationen, gegebenenfalls verändert durch Zusammentreffen mit dominierenden Bits gleichzeitig von anderen Sendern ausgesendeten Informationen wieder zugeführt bekommen oder auch nur Bits von Informationen anderer Sender zugeführt bekommen.

Vor Aufnahme des Sendebetriebs können daher die Sender feststellen, ob der Übertragungskanal schon anderweitig durch Informationsübertragung seitens eines anderen Senders belegt ist, woraufhin sie ihren Belegungsversuch evtl. gar nicht beginnen bzw. abbrechen und zu einem späteren Zeitpunkt wiederholen werden.

Aufgrund der oben erläuterten Darstellung der Bits der zu übertragenden Informationen kann ein Sender, der sich schon im Sendebetrieb befindet, einen in diesem Stadium unberechtigten Zugriff auf den gemeinsamen Übertragungskanal erkennen, dann nämlich, wenn ein von ihm ausgesendetes nicht dominierendes Bit auf dem Prüfkanal zum entgegengesetzten Binärwert verfälscht zurückempfangen wird. Ein solcher Fall des unberechtigten Zugriffs wird jedoch wegen der vorstehend erläuterten Belegungsprüfung des Übertragungskanals vor Sendebeginn nur störungsbedingt und relativ selten auftreten.

Wenn ein Sender vor Sendebeginn den Übertragungskanal für frei befunden hat, könnte es bei der nachfolgenden Aufnahme des Sendebetriebs trotzdem zu einer Kollision kommen, wenn exakt zum gleichen Zeitpunkt ein anderer Sender den Sendebetrieb aufgenommen hat.

Um dies zu vermeiden, ist vorgesehen, daß die Sender am Amfang eines Sendevorgangs ihre eigene Adresse abgeben. Da die Adressen der einzelnen Sender sich mindestens in einem Bit unterscheiden, wird bei gleichzeitigem Start des Sendevorgangs durch zwei oder mehr Sender mindestens ein auf dem Prüfkanal zurückübertragenes Adressenbit verfälscht sein, mit der Folge, daß der Sender, der dies zuerst feststellt, seinen Sendevorgang unterbricht und schließlich nur noch einer der gleichzeitig im Sendebetrieb befundenen Sender den Übertragungskanal belegt und seinen Sendevorgang fortsetzt.

Die insoweit geschilderte Prozedur ist beispielsweise im Rotbuch des CCITT beschrieben und auch Gegenstand der Europäischen Patentanmeldung 87101540.0 sowie der deutschne Patentanmeldung P 36055886.6.

Bei den geschilderten Verhältnissen ist es auch möglich, einen Hardware-Fehler zu erkennen, der sich in ununterbrochenem Anliegen von dominierendem Potential auf der Übertragungsleitung äußert.

Ein weiterer Fehler, der darin besteht, daß bei einem oder bei mehreren Sendern die Verbindung zu einer Empfangsschaltung für die im Prüfkanal zurückübertragenen Informationen aufgetrennt ist, läßt sich bei den in der Praxis vorliegenden schaltungstechnischen Gegebenheiten allerdings nicht erkennen und führt außerdem zu weiterreichenden Folgen. Die schaltungstechnischen Gegebenheiten liegen darin, daß bei aufgetrenntem Eingang der Empfangsschaltung sich ein bestimmter Potentialzustand einstellt, der nicht durch die Belegungsverhältnisse des gemeinsamen Übertragungskanals begründet ist und daher zu Fehlinterpretationen führt. Bei der häufig angewendeten TTL-Schaltungstechnik beispielsweise führt ein offener Eingang zum Entstehen des nichtdominierenden Potentialwerts für die Darstellung von Digitalinformationen mit der Folge, daß der betroffene Sender auf dem Prüfkanal in Rückwärtsrichtung nicht mehr das eine Belegung des Kanals anzeigende dominierende Potential des anderen Binärwerts erkennen kann. Der Sender wird daher den Übertragungskanal als frei intepretieren und seinen Sendevorgang beginnen und damit unter anderem auch durch dominierendes Potential dargestellte Bits aussenden, durch die der Sendebetrieb von nicht von solchen Unterbrechungen betroffenen Sendern gestört wird, woraufhin diese ihren Sendebetrieb abbrechen, wogegen der störende Sender, der ja seine Eigenschaft als Störer nicht erkennt, weitersenden und damit weitere Störungen verursachen wird.

Wenn vorgesehen ist, daß die einzelnen Sender zur Überprüfung der Verfügbarkeit der Datenübertragungsstrecke routinemäßig Prüfnachrichten abgeben, um den Prüfkanal in Rückwärtsrichtung auf die ordnungsgemäße Rückübertragung zu überprüfen, wobei diese Prüfprozedur bei allen Sendern ungefähr zur gleichen Zeit versucht wird, kann sich die Störung durch den Sender, bei dem der Zugang zu der Empfangsschaltung unterbrochen ist, besonders nachhaltig auf die übrigen Sender auswirken.

Die Aufgabe der Erfindung besteht darin, ein Verfahren der eingangs genannten Art dahingehend auszugestalten, daß die erläuterte Unterbrechungsstörung bei einem einzelnen Sender sich nicht auf die übrigen Sender auswirken kann.

Diese Aufgabe wird durch die im Kennzeichen des Patentanspruchs 1 angegebenen Verfahrensmerkmale gelöst.

Demnach erfolgt mit Hilfe eines Testimpulses, der außerhalb der Zeitschlitze des Übertragungskanals gesendet wird, eine Prüfung auf das Vorliegen des erläuterten speziellen Fehlerfalls. Sofern ein solcher Fehler vorliegt, wird der Zugriff auf den Übertragungskanal und damit die Möglichkeit der Störung der übrigen Sender bleibend unterbunden.

Weitere Ausgestaltungen der Erfindung sind in den Unteransprüchen gekennzeichnet.

Gemäß Anspruch 2 erfolgt die Aussendung des Testimpulses periodisch, so daß das Auftreten des speziellen Fehlers möglichst bald nach dessen Auftreten und nicht erst vor einer beabsichtigten Aufnahme des Sendebetriebs erkannt wird.

Der Anspruch 3 betrifft eine Ausführungsform der Erfindung, die auf eine Anwendung auf die in Fernsprechvermittlungssystemen üblichen PCM-Zeitmultiplexsysteme zugeschnitten ist.

Nachstehend wird die Erfindung anhand eines Ausführungsbeispiels unter Bezugnahme auf eine Zeichnung näher erläutert.In der Zeichnung zeigen:
Figur 1 einen Ausschnitt aus dem Anschlußbereich einer Fernmeldevermittlungsstelle, auf dessen Betrieb die Erfindung angewendet werden kann,
Figur 2 ein zugehöriges Zeitdiagramm.

In der Figur sind Sender SLM-n bis SLM-x angedeutet. Diese Sender können beispielsweise Bestandteil einer zu einer Fernmeldevermittlungsstelle gehörenden digitalen Leitungseinheit sein, an die unter anderem Anschlußleitungen zu ISDN-Endgeräten angeschlossen sind. Von solchen ISDN-Endgeräten werden über jeweils zwei sogenannte B-Kanäle mit jeweils einer Übertragungsrate von 64 kBit/s Nutzinformationen wie Sprache, Text und Daten und auf einem sogenannten D-Kanal mit einer Übertragungsbitrate von 16 kBit/s Signalisierungsinformationen sowie p-Daten, das sind paketorientierte Daten, empfangen.

Innerhalb der Einheiten SLM-n bis SLM-x erfolgt eine Abtrennung der p-Daten des D-Kanals, sowie das Einfügen derselben auf einen gemeinsamen, sogenannten Summe-p-Kanal, der zu einem Multiplexsystem mit 4,096 MBit/s für 64 Zeitschlitze für die Übertragung auf einem PCM-Bus PCM-B gehört. Die im Summe-P-Kanal übertragenen Daten werden einer außerhalb der erwähnten digitalen Leitungseinheit gelegenen Datenverarbeitungseinheit für paketorientierte Daten zugeführt. Bei höherer Verkehrsbelastung können ein oder mehrere weitere Kanäle auf dem PCM-Bus für die Übertragung von p-Daten reserviert sein. Die übrigen auf diesem PCM-Bus gebildeten Kanäle dienen der Übertragung von vorwiegend Sprachinformationen und auch Steuerinformationen.

Die Weiterübertragung der Daten der erwähnten B-Kanäle an die Vermittlungsstelle, zu der die Einheit SLM-n bis SLM-x gehören, über weitere PCM-Leitungen ist hier nicht dargestellt.

Das erwähnte Einfügen der p-Daten in den gemeinsamen Summe-p-Kanal durch die Einheiten SLM-n bis SLM-x stellt als Beispiel die gemeinsame Nutzung eines Zeitmultiplexübertragungskanals durch eine Mehrzahl von Sendern dar, auf die sich die Erfindung im besonderen bezieht.

Von den Einrichtungen SLM-n bis SLM-x, im folgenden als "Sender" bezeichnet, geht ein weiterer gemeinsamer Bus-CDX, ein sogenannter Collision-Bus, aus, der an einen Bus-Verteiler BD führt, an den weitere Gruppen von Sendern SLM angeschlossen sind.

Da die Figur unter anderem der Veranschaulichung einer Rückführungsschleife dienen soll, ist eine gestreckte Darstellungsform gewählt, bei der einzelne Bestandteile wie der Sender SLM-n sowie eine Schnittstelleneinheit DIU, zu der der Collision-Bus CDX vom Bus-Verteiler BD aus weiterführt, zweimal dargestellt sind. Tatsächlich handelt es sich hierbei jedoch um Bestandteile ein und derselben Baugruppe, wobei lediglich unterschiedliche Funktionen angesprochen sind.

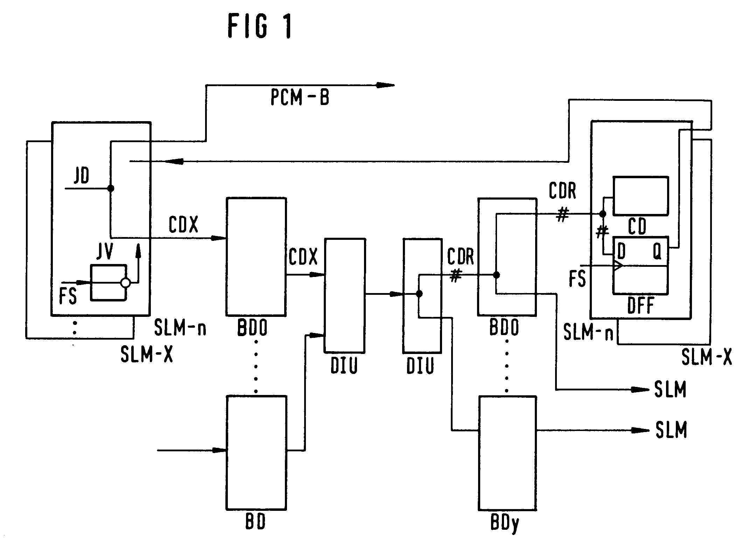

Auf dem Collision-Bus CDX ist, wie eingangs erläutert, ein Prüfkanal eingerichtet, auf den die Sender SLM-n bis SLM-x ihre abzusendenden Informationen außer auf den eigentlichen Übertragungskanal auf dem PCM-Bus PCM-B abgeben. Dieser Prüfkanal wird in der Schnittstelleneinheit DIU gespiegelt, weswegen in der gestreckten Darstellung der Figur 1 von der rechten Darstellung derselben aus der Rückkanal des Collision-Buses, hier mit CDR bezeichnet, gezeigt ist, der zu den Sendern SLM-n bis SLM-x zurückführt. Die zurückgeführten Daten, werden, wie eingangs erläutert bitweise daraufhin überprüft, ob sie mit den ausgesendeten Daten übereinstimmen, wozu eine entsprechende Detektorschaltung CD vorhanden ist, von der aus, sofern eine solche Übereinstimmung nicht gegeben ist, der weitere Zugriff des Senders SLM-n auf den PCM-Bus PCM-B unterbunden wird.

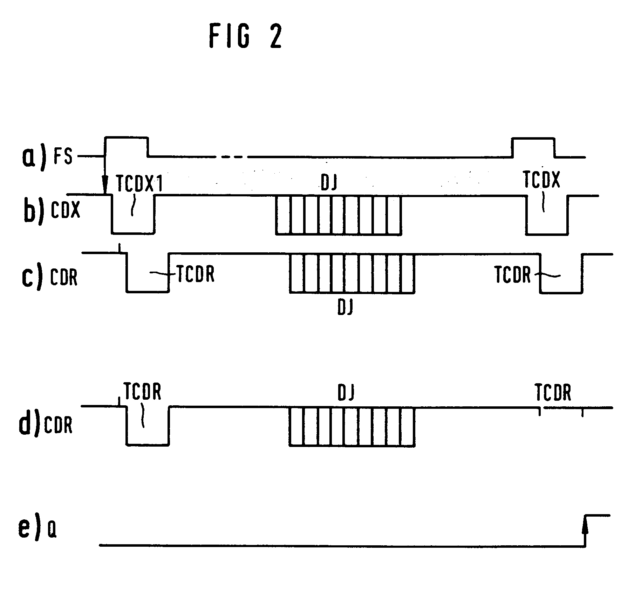

Im Hinblick auf die Erweiterung der Kollisions-Prüfung gemäß der Erfindung enthalten die Sender ferner ein D-Flip-Flop DFF, zu dessen D-Eingang der Rückkanal CDR des Collision-Buses ebenfalls Zugang hat. Dem Takteingang des D-Flip-Flops wird ein Signal FS zugeführt, auf das noch eingegangen wird. Das am Q-Ausgang des D-Flip-Flops DFF in einer bestimmten Kippstufenstellung abgegebene Ausgangssignal wird dazu benutzt, das Senden von Nutzinformationen auf den Summe-p-Kanal des PCM-Busses PCM-B zu unterbinden. In der Figur ist dies durch eine Rückführung des Ausgangssignals des D-Flip-Flops DFF an die auf der linken Seite befindliche Darstellung des Senders SLM-n veranschaulicht. Die der Erfindung zugrundeliegende Idee läuft, wie dargelegt, darauf hinaus, vor der eigentlichen Prüfung auf Verfügbarkeit des Übertragungskanals eine Prüfung daraufhin vorzunehmen, ob der Zugang zu der entsprechenden Prüfschaltung, hier also zu CD unterbrochen ist. Es wird demnach in einem Zeitschlitz, der außerhalb der Zeitschlitze liegt, die für die Übertragung benutzt werden, jeweils vor einem beabsichtigten Start eines Sendevorgangs oder aber auch periodisch ein Testimpuls gesendet. Unter der Voraussetzung des Vorliegens eines PCM-Zeitmultiplexsystems, bei dem der Zeitkanal 0 des Pulsrahmens der Übertragung eines Rahmenkennungssignal, nie jedoch einer Nutzinformation dient, wird beim vorliegenden Ausführungsbeispiel der Testimpuls von diesem Rahmenkennungssignal abgeleitet. In Figur 2, Zeile a) ist die zeitliche Lage und in Pulsform des Rahmenkennungssignals FS gezeigt. Die Zeile b) der Figur 2 zeigt mit TCDX den Testimpuls, der durch Invertierung des Rahmenkennungssignals entsteht, siehe hierzu auch den in Figur 1 als Bestandteil des Senders SLM-n gezeigten Inverter IV. Das Potential des Testimpulses ist hiermit bei der ferner vorausgesetzten Ausführung der Prüfschaltung CD in TTL-Technik dominant gegenüber dem Potential, das auf dem Collision-Bus in Rückwärtsrichtung empfangen wird, wenn der Zugang zu der Prüfschaltung an den mit # bezeichneten Stellen unterbrochen ist. Die Zeile b) zeigt ferner die zeitliche Lage des eigentlichen Prüfkanals auf dem Collision-Bus, in dem, wie dargelegt, synchron zur Datenübertragung auf dem PCM-Bus die abzugebenden Daten DI übertragen werden.

Die Zeile c) zeigt die Verhältnisse auf dem Rückkanal CDR des Collision-Busses unter der Voraussetzung eines fehlerfreien Empfangs des Testimpulses in Rückwärtsrichtung, der hier jetzt mit TCDR bezeichnet ist und den Eingang des Flip-Flops DFF erreicht hat. Das Flip-Flop behält unter diesen Umständen seine rückgesetzte Lage bei, so daß das an Q-Ausgang abgegebene Signal die Aussendung von Daten auf dem Prüfkanal des Collision-Busses nicht beeinflußt.

Wenn, wie in Zeile d) gezeigt, durch eine Leitungsunterbrechung an den mit # bezeichneten Stellen der Testimpuls den Eingang D des Flip-Flops nicht erreicht, damit also ein Potentialwechsel zum erwarteten Zeitpunkt unterbleibt und somit der Testimpuls nicht mehr zurückempfangen wird, dann erfolgt durch mit seiner Rückflanke das Flip-Flop triggernde Rahmenkennungssignal FS ein Setzen mit der Folge, daß am Q-Ausgang wie in Zeile e der Figur 2 gezeigt ein Potentialwechsel auf, der die Aussendung von Daten auf dem Prüfkanal des Collision-Busses bleibend unterbindet, bis der Defekt behoben ist. Es unterbleibt demnach natürlich auch die Aussendung von Nutzinformationen auf dem PCM-Bus PCM-B. Der Defekt beim Sender SLM-n kann also nicht dazu führen, daß die übrigen intakten Sender in ihrem Betrieb gestört werden.

## Patentansprüche

1. Verfahren zur gemeinsamen Nutzung eines Zeitmultiplexübertragungskanals durch eine Mehrzahl von Sendern für die Übertragung von binärcodierten digitalen Informationen, bei denen Bits des einen Binärwerts durch ein Potential dargestellt sind, das sich gegenüber dem Potential, durch das die Bits des anderen Binärwerts dargestellt sind, bei gleichzeitigem Auftreten auf einer Übertragungsstrecke durchsetzt demgemäß zur Unterbindung zweier oder mehrerer Übertragungsvorgänge durch zwei oder mehrere Sender ein Prüfkanal eingerichtet ist, auf den die Sender ihre auszusendenden Informationen außer auf den Übertagungskanal abgeben und über den sie in Rückwärtsrichtung diese ausgesendeten Informationen gegebenenfalls verändert durch Zusammentreffen mit dominierenden Bits gleichzeitig von anderen Sendern ausgesendeten Informationen oder auch nur Bits von Informationen anderer Sender wieder zugeführt bekommen,
demgemäß ferner zur Unterbindung zweier oder mehrerer gleichzeitiger Übertragungsvorgänge nach gleichzeitigen Starts zweier oder mehrerer Sender jeder Sender am Anfang eines Sendevorgangs seine eigene Adresse oder eine spezifische Kennung abgibt und die dementsprechend auf dem Prüfkanal wieder zurückübertragenen Adressenbits mit den entsprechenden abgegebenen Adressenbits vergleicht und bei Feststellung einer Ungleichheit den Sendevorgang abbricht,
**dadurch gekennzeichnet**, daß die Sender zumindest vor Abwicklung der Prüfvorgänge bei einem beabsichtigten Start eines Sendevorgangs in einem außerhalb der Zeitschlitze des wenigstens einen Übertragungskanals liegenden Zeitschlitz einen Testimpuls senden, dessen Spannungswert von demjenigen abweicht, der sich an Eingang der Empfangseinrichtung für die im Prüfkanal in Rückwärtsrichtung übertragenen Informationen bei unterbrochener Zuleitung einstellt, und auf den Rückempfang des Testimpulses prüfen und sofern dieser nicht erfolgt, die Aussendung von Informationen im Zeitschlitz des Übertragungskanals sperren.

2. Verfahren nach Anspruch 1,
**dadurch gekennzeichnet**, daß die Aussendung des Testimpulses periodisch erfolgt.

3. Verfahren nach Anspruch 2 zur Anwendung auf eine Fernmeldevermittlungsanlage, bei der die Zeitschlitze der Kanäle in Zeitrahmen auftreten, bei denen ein bestimmter Zeitschlitz nicht für die Übertragung von Nutzinformationen herangezogen wird,
**dadurch gekennzeichnet**, daß die Aussendung des Testimpulses in dem genannten bestimmten Zeitschlitz erfolgt

4. Verfahren nach einem der vorhergehenden Ansprüche,
**dadurch gekennzeichnet**, daß der Prüfkanal auf einem gesonderten Prüfbus gebildet ist
